# EUROPEAN PATENT APPLICATION

(11) **EP 4 678 416 A1**
(43) Date of publication of application: **14.01.2026**
(21) Application number: 23926424.5
(22) Date of filing: 13.11.2023
(51) Int. Cl.: B60C 9/00, B60C 9/18, B60C 9/20, B60C 9/22, D07B 1/06

(54) **PNEUMATIC TIRE**

(30) Priority: 06.03.2023 JP 2023034079
(71) Applicant: BRIDGESTONE CORPORATION, Chuo-ku Tokyo 104-8340 (JP)
(72) Inventor: OBANA, Naohiko, Tokyo 104-8340 (JP)
(74) Representative: Marks & Clerk LLP
(86) International application number: PCT/JP2023/040813
(87) International publication number: WO 2024/185218

(57) **Abstract**

The pneumatic tire of the present invention includes two or more inclined belt layers each formed of a rubberized layer of belt cords extending so as to intersect each other between layers, and one or more circumferential belt layers, each disposed on a tire radial inner side of the inclined belt layers and formed of a rubberized layer of reinforcement cords extending in the tire circumferential direction or extending at an inclination angle of 5° or less with respect to the tire circumferential direction. An elastic modulus E1 in a high strain region of an extracted cord of the reinforcement cords is 30 GPa to 80 GPa.

## Description

### TECHNICAL FIELD

The present disclosure relates to a pneumatic tire.

### BACKGROUND

It has been proposed to arrange a circumferential belt layer in order to suppress the radial growth of a pneumatic tire (for example, PTL 1).

### CITATION LIST

### Patent Literatures

PTL 1: JP 2009-196548 A

### SUMMARY

### (Technical Problem)

When the above circumferential belt layer is provided on the tire radial inner side of the inclined belt layer, radial growth is suppressed, and a decrease in uneven wear resistance due to radial growth can be suppressed. However, the circumferential belt layer bears a large load during tire running, and particularly, the shear strain in the rubber near the tire width direction end portion of the circumferential belt layer becomes large, so that failures such as cracks are likely to occur in the rubber around the reinforcement cords of the circumferential belt layer. Therefore, there is a demand for a pneumatic tire in which the shear strain near the end portion of the circumferential belt layer is small while maintaining uneven wear resistance.

The present disclosure aims to provide a pneumatic tire that achieves both uneven wear resistance and durability.

### (Solution to Problem)

The gist of the configuration of the present disclosure is as follows.
(1) A pneumatic tire comprising: two or more inclined belt layers, each formed of a rubberized layer of belt cords extending so as to intersect each other between layers; and
   one or more circumferential belt layers, each disposed on a tire radial inner side of the inclined belt layers and formed of a rubberized layer of reinforcement cords extending in the tire circumferential direction or extending at an inclination angle of 5° or less with respect to the tire circumferential direction,
   wherein an elastic modulus E1 in a high strain region of an extracted cord of the reinforcement cords is 30 GPa to 80 GPa.

Here, "extracted cord" refers to a reinforcement cord with rubber, which is extracted by dissecting a vulcanized pneumatic tire.

Further, "elastic modulus in a high strain region" refers to a value obtained by dividing the slope of the tangent of the load-strain curve at 1.0% strain on the load-strain curve of the extracted cord by the total cross-sectional area of the filaments constituting the cord.

### (Advantageous Effect)

According to the present disclosure, it is possible to provide a pneumatic tire that achieves both uneven wear resistance and durability.

### BRIEF DESCRIPTION OF THE DRAWINGS

In the accompanying drawings:
FIG. 1 is a diagram illustrating an example of an S-S curve (load-strain curve) of an extracted cord of a tire steel cord used as a reinforcement cord for a circumferential belt layer of a pneumatic tire according to one embodiment of the present disclosure;
FIG. 2 is a diagram illustrating an example of an S-S curve (load-strain curve) of a green cord of a tire steel cord used as a reinforcement cord for a circumferential belt layer of a pneumatic tire according to one embodiment of the present disclosure;
FIG. 3 is a cross-sectional view of a tire steel cord used as a reinforcement cord for a circumferential belt layer of a pneumatic tire according to one embodiment of the present disclosure;
FIG. 4 is a cross-sectional view in the tire width direction of a pneumatic tire according to one embodiment of the present disclosure;

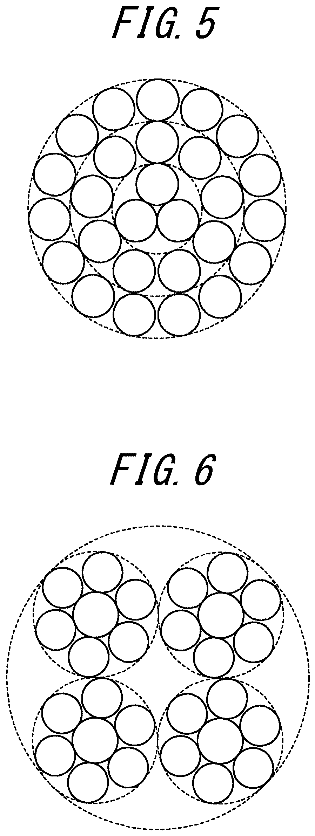

FIG. 5 is a cross-sectional view illustrating a cord structure of a comparative example;
FIG. 6 is a cross-sectional view illustrating a cord structure of Invention Example 1;
FIG. 7 is a diagram illustrating S-S curves (load-strain curves) of extracted cords of respective tire steel cords in the examples; and
FIG. 8 is a diagram illustrating S-S curves (load-strain curves) of green cords of respective tire steel cords in the examples.

Hereinafter, embodiments of the present disclosure will be illustrated and described in detail with reference to the drawings. First, an example of a steel cord for tires used as a reinforcement cord for a circumferential belt layer of a pneumatic tire according to one embodiment of the present disclosure (hereinafter also simply referred to as "tire") will be described.

### (Steel Cord for Tire)

### [Properties of Extracted Cord]

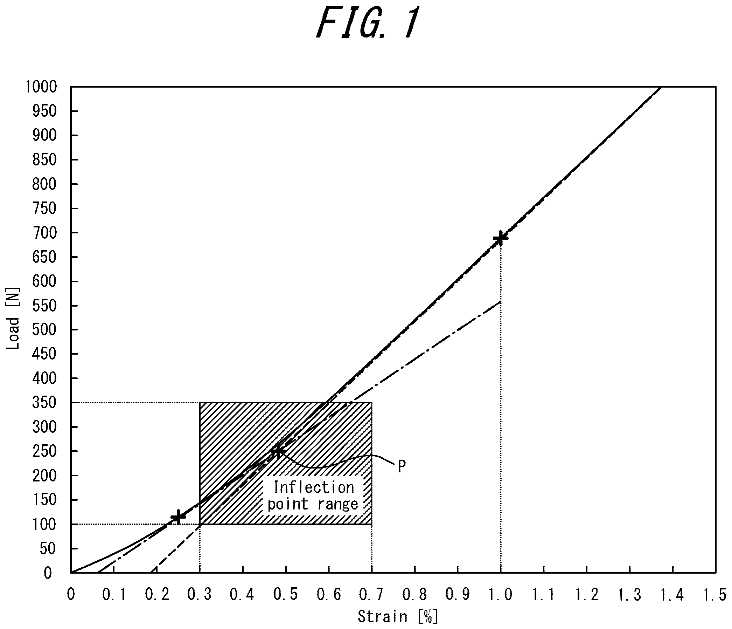

FIG. 1 is a diagram illustrating an example of an S-S curve (load-strain curve) of an extracted cord of a steel cord for tires used as a reinforcement cord for a circumferential belt layer of a pneumatic tire according to one embodiment of the present disclosure. In FIG. 1, the one-dot chain line is the tangent to the load-strain curve of the extracted cord at 0.25% strain, and the broken line is the tangent to the load-strain curve of the extracted cord at 1.0% strain. The inflection point P is the intersection point of these tangents. As defined above, the elastic modulus E1 in the high strain region is the value obtained by dividing the slope of the broken line by the total cross-sectional area of the filaments constituting the cord. The elastic modulus E2 in the low strain region is the value obtained by dividing the slope of the one-dot chain line (the tangent to the load-strain curve of the extracted cord at 0.25% strain) by the total cross-sectional area of the filaments constituting the cord.

The steel cord for tires (hereinafter also simply referred to as "cord") used as a reinforcement cord for the circumferential belt layer of the tire in the present embodiment has an elastic modulus E1 in the high strain region of the extracted cord of 30 GPa to 80 GPa. Further, it is preferable that the elastic modulus E2 in the low strain region of the extracted cord is 15 GPa to 60 GPa.

If the elastic modulus E1 in the high strain region of the extracted cord exceeds 80 GPa, when the steel cord for tires is used as a reinforcement cord for a circumferential belt layer adjacent to an inclined belt layer in a pneumatic tire (hereinafter also simply referred to as "when used in a tire"), the rigidity difference between the circumferential belt layer and the inclined belt layer becomes large, the strain in that region also increases, and the cut resistance of the steel cord for tires decreases. On the other hand, if the elastic modulus E1 in the high strain region of the extracted cord is less than 30 GPa, the elastic modulus in the low strain region also decreases accordingly, and when used in a tire, it becomes impossible to effectively suppress the radial growth of the tire when internal pressure is applied. For similar reasons, it is preferable that the elastic modulus E1 in the high strain region of the extracted cord is 40 GPa to 70 GPa.

Further, by setting the elastic modulus E2 in the low strain region of the extracted cord to 15 GPa or more, it is possible to effectively suppress the radial growth of the tire when internal pressure is applied, when used in a tire. On the other hand, by setting the elastic modulus E2 in the low strain region of the extracted cord to 60 GPa or less, it is possible to set the elastic modulus in the high strain region of the extracted cord within a desired range. For similar reasons, it is more preferable that the elastic modulus E2 in the low strain region of the extracted cord is 25 GPa to 60 GPa.

The ratio E1/E2 of the elastic modulus E1 in the high strain region of the extracted cord to the elastic modulus E2 in the low strain region of the extracted cord is preferably 1.1 to 3.0. By setting the ratio E1/E2 to 1.1 or more, the elastic modulus E2 can be made appropriately large relative to the elastic modulus E1, thereby effectively suppressing the radial growth of the tire when internal pressure is applied. On the other hand, by setting the ratio E1/E2 to 3.0 or less, the elastic modulus E1 can be made appropriately small relative to the elastic modulus E2, thereby reducing the rigidity difference between the circumferential belt layer and the inclined belt layer, reducing the strain in that region, and improving the cut resistance of the steel cord for tires. For similar reasons, it is more preferable that the above ratio E1/E2 is 1.1 to 2.5.

Here, it is preferable that the inflection point P of the extracted cord is within a range of 0.3% to 0.7% strain and 100 N to 350 N load. When the inflection point P is at 0.3% or more and 0.7% or less strain, by setting the load to 100 N or more, the elastic modulus at low load does not become too low, and the radial growth of the tire when internal pressure is applied can be suppressed. On the other hand, when the inflection point P is at 0.3% or more and 0.7% or less strain, by setting the load to 350 N or less, the elastic modulus at high load does not become too high, and when used in a tire, the rigidity difference between the circumferential belt layer and the inclined belt layer can be reduced, the strain in that region does not become too large, and the cut resistance of the steel cord for tires can be improved. Further, when the inflection point P is at 100 N or more and 350 N or less load, by setting the strain to 0.3% or more, the elastic modulus at high load does not become too high, and when used in a tire, the rigidity difference between the circumferential belt layer and the inclined belt layer can be reduced, the strain in that region does not become too large, and the cut resistance of the steel cord for tires can be improved. On the other hand, when the inflection point P is at 100 N or more and 350 N or less load, by setting the strain to 0.7% or less, the elastic modulus in the low strain region does not become excessively low, and when used in a tire, the radial growth of the tire when internal pressure is applied can be effectively suppressed. From such a viewpoint, it is more preferable that the inflection point P of the extracted cord is within a range of 0.3% to 0.6% strain and 100 N to 320 N load.

Note that it is preferable that the elastic modulus of the extracted cord at 0.8% strain is 25 GPa to 75 GPa. It is also preferable that the elastic modulus of the extracted cord at 1.2% strain is 35 GPa to 80 GPa.

### [Properties of Green Cord]

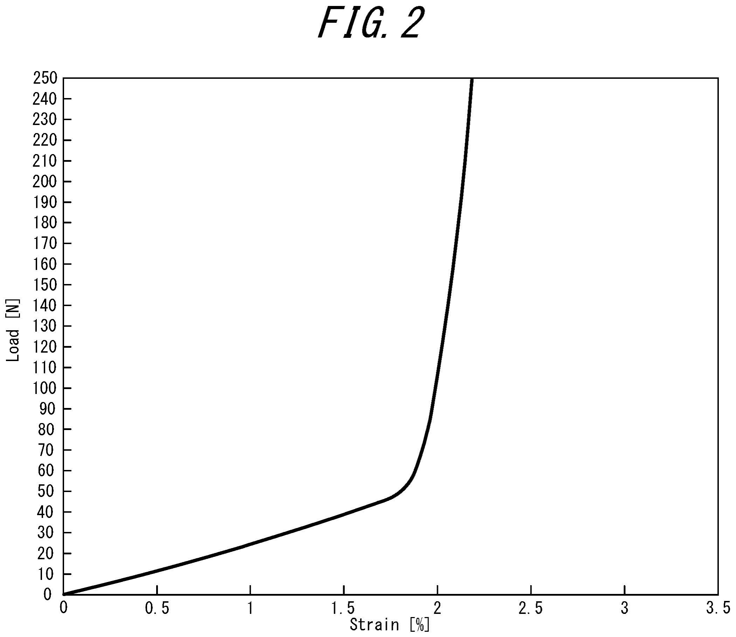

In order to obtain the above properties of the extracted cord, the properties of the green cord can be as follows. FIG. 2 is a diagram illustrating an example of an S-S curve (load-strain curve) of a green cord of a steel cord for tires used as a reinforcement cord for a circumferential belt layer of a pneumatic tire according to one embodiment of the present disclosure.

The elastic modulus E3 in the high strain region of the green cord is preferably 30 GPa to 80 GPa, and more preferably 35 GPa to 75 GPa. Here, "elastic modulus in the high strain region of the green cord" refers to the value obtained by dividing the slope of the tangent at 200 N load on the load-strain curve of the green cord by the total cross-sectional area of the filaments constituting the cord. Further, the elastic modulus E4 in the low strain region of the green cord is preferably 1 GPa to 5 GPa, and more preferably 1 GPa to 3 GPa. Here, "elastic modulus in the low strain region of the green cord" refers to the value obtained by dividing the slope of the tangent at 10 N load on the load-strain curve of the green cord by the total cross-sectional area of the filaments constituting the cord. By setting the elastic modulus in the low strain region of the green cord to 1 GPa to 5 GPa, it is possible to manufacture an appropriate tire in the belt forming and tire vulcanization processes, and the occurrence of buckling in the tire after vulcanization can also be effectively suppressed.

The ratio E3/E4 of the elastic modulus E3 in the high strain region of the green cord to the elastic modulus E4 in the low strain region of the green cord is preferably 20 to 50, and more preferably 25 to 45.

The inflection point of the green cord is preferably within a range of 1.5% to 3.0% strain and 30 N to 80 N load, and more preferably within a range of 1.5% to 3.0% strain and 30 N to 70 N load. Here, "inflection point of the green cord" refers to the intersection point of the tangent at 10 N load and the tangent at 200 N load on the load-strain curve of the green cord.

### [Structure of Steel Cord for Tire]

### [[Cord Structure]]

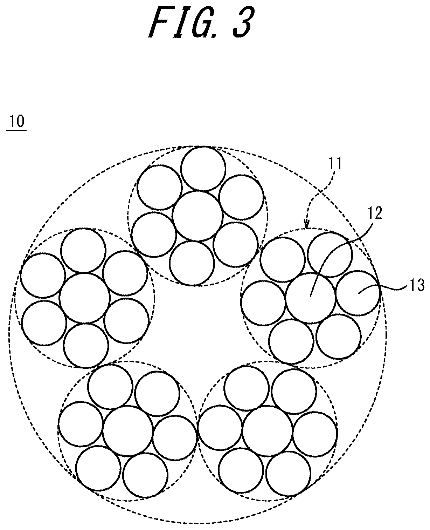

FIG. 3 is a cross-sectional view of a steel cord for tires used as a reinforcement cord for a circumferential belt layer of a pneumatic tire according to one embodiment of the present disclosure. As illustrated in FIG. 3, in this example, the cord 10 is composed of a plurality of sheath strands 11 (and does not have a core strand). Each sheath strand 11 is a so-called "1+N structure" in which N sheath filaments 13 (six in the illustrated example) are arranged around one core filament 12. N is preferably an integer from 4 to 7. Thus, the cord 10 of the present embodiment is a multiple-twist structure in which a plurality of filaments (one core filament 12 and six sheath filaments 13 in the illustrated example) are twisted together to form (five in the illustrated example) strands (sheath strands 11), which are further twisted together. The number of strands is preferably 3 to 5. By setting the number of strands to 3 or more, as described later, it is possible to ensure the strength as a circumferential belt layer even if the filament diameter is made relatively small, while by setting the number of strands to 5 or less, it is possible to suppress the occurrence of strand drop and stabilize the twisting characteristics. Further, by setting the number of core filaments 12 to one, it is possible to suppress the occurrence of twisting defects due to the difference in the amount of twisting shrinkage between the core filament 12 and the sheath filaments 13. Further, by setting the number of sheath filaments 13 to 4 or more, it is possible to stabilize the twisting shape so that the gap between the sheath filaments does not become large, while by setting the number of sheath filaments 13 to 7 or less, it is possible to ensure a sufficient gap for rubber to penetrate. Further, by not providing a core strand, when the cord 10 is used in a tire, the space at the center of the cord 10 is filled with rubber, the tightening stress between the strands is dispersed, and the premature breakage of the sheath filaments 13 at the contact portion is suppressed, resulting in good steel cord strength. Note that it is preferable that the twisting direction of the strands and the twisting direction of the cord are the same.

### [[Cord Diameter and Filament Diameter]]

In the present embodiment, for all filaments (in this example, one core filament 12 and six sheath filaments 13), it is preferable that the ratio B/A of the filament diameter B to the cord diameter A is 0.13 or less (preferably 0.11 or less). By setting the ratio B/A to 0.13 or less, the filament diameter B does not become excessively large relative to the cord diameter A, and it is possible to suppress the breakage of filaments due to bending deformation of the filaments caused by tension on the cord. On the other hand, if the filament diameter B is too small, sufficient cord strength cannot be obtained, so it is preferable that the ratio B/A is 0.09 or more.

The cord diameter A of the cord in the present embodiment is preferably 1.5 mm to 2.2 mm, and more preferably 1.9 mm to 2.2 mm. By setting the cord diameter A to 1.5 mm or more (more preferably 1.9 mm or more), it is possible to ensure the strength as a circumferential belt layer when used in a tire, while by setting it to 2.2 mm or less, it is possible to reduce the weight of the tire when used in a tire.

The filament diameter B of the filaments is preferably 0.3 mm or less, and more preferably 0.25 mm or less. By setting the filament diameter B to 0.3 mm or less, it is possible to suppress the breakage of filaments due to bending deformation of the filaments caused by tension on the cord. On the other hand, if the filament diameter B is too small, sufficient cord strength cannot be obtained, so it is preferable that the filament diameter B is 0.15 mm or more.

The ratio B12/B13 of the filament diameter B12 of the core filament 12 to the filament diameter B13 of the sheath filaments 13 is preferably 1.10 to 1.16. By setting the ratio B12/B13 to 1.16 or less, it is possible to make the arrangement of the sheath filaments uniform so that no bias occurs, thereby making the twisting characteristics of the cord uniform, while by setting the ratio B12/B13 to 1.10 or more, it is possible to ensure a sufficient gap for rubber to penetrate.

### [[Twist Angle]]

The twist angle of the sheath strand 11 with respect to the cord axis is preferably 15.0° to 25.0°. The twist angle refers to the angle formed by the helical axis of the strand with respect to the longitudinal direction of the steel cord, and is the average value in the longitudinal direction of the cord. By setting the twist angle to 15.0° or more, the elastic modulus in the high strain region of the green cord and the extracted cord can be set to the upper limit or less, while by setting it to 25.0° or less, the twisting characteristics can be stabilized.

### [Material of Filament]

In the cord of the present embodiment, the material of the filament is not particularly limited, but it is preferably high-carbon steel containing 0.80 mass% or more of carbon, for example. By using a filament material of high-carbon steel containing 0.80 mass% or more of carbon, which has high hardness, sufficient cord strength can be obtained. On the other hand, from the viewpoint of fatigue resistance, it is preferable that the carbon content is 1.5% or less.

### [Adjustment Method]

In order to set the elastic modulus E1 in the high strain region of the extracted cord to, for example, a range of 30 GPa to 80 GPa, and the elastic modulus E2 in the low strain region of the extracted cord to, for example, a range of 15 GPa to 60 GPa, adjustment can be made by adopting, for example, the following cord structure.

That is, to adjust the elastic modulus E1 in the high strain region of the extracted cord to the above-mentioned lower range, a cord formed by further twisting together strands made by twisting a plurality of filaments, without a core strand, as described above, can be used. In addition, adjustment can be made by changing the filament diameter, number of strands, twist angle, cord diameter, and so on. Further, the elastic modulus E2 in the low strain region of the extracted cord can be determined according to the expansion ratio during tire manufacture, in addition to the above.

### (Pneumatic Tire)

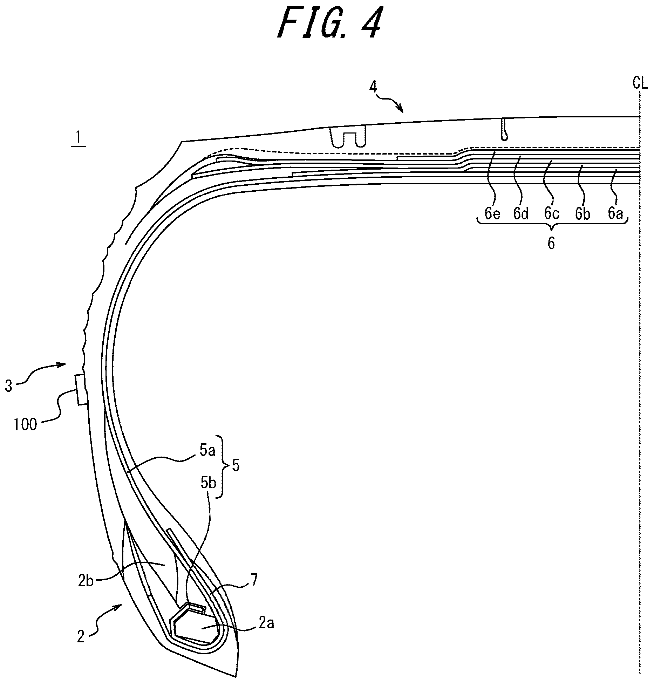

FIG. 4 is a cross-sectional view in the tire width direction of a pneumatic tire according to one embodiment of the present disclosure. In FIG. 4, only one half portion in the tire width direction with the tire equatorial plane CL as the boundary is illustrated, but the other half portion has the same configuration.

As illustrated in FIG. 4, the tire 1 of the present embodiment includes a pair of bead portions 2, a pair of sidewall portions 3 each connected to a respective bead portion 2, and a tread portion 4 connected to the pair of sidewall portions 3. Further, the tire 1 further includes a carcass 5 extending toroidally between the pair of bead portions 2, and a reinforcement layer 6 disposed on the tire radial outside of the crown portion of the carcass 5.

In the illustrated example, each of the pair of bead portions 2 has a bead core 2a embedded therein, and a bead filler 2b is disposed on the tire radial outside of the bead core 2a.

Further, in the illustrated example, the carcass 5 is composed of one or more carcass plies. The carcass 5 includes a carcass main body portion 5a extending toroidally between the pair of bead portions 2, and a carcass wound portion 2b formed by extending from the carcass main body portion 5b and being wound around the bead core 2a. Further, in the illustrated example, a wire chafer 7 is disposed around the bead core 2a and on the outer periphery of the carcass wound portion 5b.

The reinforcement layer (belt) 6, in the illustrated example, is composed of five reinforcement layers 6a to 6e. In the illustrated example, the belt layer 6a is a rubberized layer of cords extending at an inclination angle of approximately 90° with respect to the tire circumferential direction. The belt layer 6b is composed of reinforcement cords extending in the tire circumferential direction or extending at an inclination angle of 5° or less with respect to the tire circumferential direction. In the pneumatic tire of the present embodiment, the above-described steel cord for tires is used as the reinforcement cord of the belt layer 6b. The belt layers 6c and 6d are inclined belt layers, each formed of a rubberized layer of belt cords extending so as to intersect each other between layers and extending at an inclination angle of, for example, 15° to 50° with respect to the tire circumferential direction. By setting the inclination angle of the belt cords of the inclined belt layers with respect to the tire circumferential direction to 15° or more, wear resistance can be further improved, while by setting it to 50° or less, the durability of the circumferential belt layer and the effect of suppressing the radial growth of the tire can be further enhanced. The belt layer 6e is a protective belt layer formed of a rubberized layer of cords extending at an inclination angle of, for example, 15° to 50° with respect to the tire circumferential direction. In this example, in the same half portion in the tire width direction with the tire equatorial plane CL as the boundary, the belt cords of the belt layer 6d and the cords of the belt layer 6e extend in the same direction in the tire circumferential direction from the inner side to the outer side in the tire width direction.

In the illustrated example, the belt layers 6a, 6b, 6c, 6d, and 6e are arranged in this order from the tire radial inside. That is, in this example, the circumferential belt layer 6b is disposed adjacent to the tire radial inside of the inclined belt layers 6c and 6d (in this example, without any other belt layer interposed therebetween).

In the illustrated example, the widths of the belt layers in the tire width direction, in order from largest to smallest, are belt layers 6c, 6d, 6b, 6e, and 6a, but the present disclosure is not limited to this case. The number of belt layers and the widths of the belt layers in the tire width direction can be variously configured.

Although not particularly limited, the tire of the present embodiment can be suitably used as a heavy-duty tire, such as a truck or bus tire.

As described above, the pneumatic tire of the present embodiment includes two or more inclined belt layers (in this example, belt layers 6c and 6d) each formed of a rubberized layer of belt cords extending so as to intersect each other between layers, and one or more circumferential belt layers 6b each formed of a rubberized layer of reinforcement cords, which are the above-described steel cords for tires, and the circumferential belt layer 6b is disposed adjacent to the tire radial inside of the inclined belt layers 6c and 6d, and the steel cord for tires extends in the tire circumferential direction or extends at an inclination angle of 5° or less with respect to the tire circumferential direction.

According to the pneumatic tire of the present embodiment, first, since the circumferential belt layer 6b is disposed on the tire radial inside of the inclined belt layers 6c and 6d, the radial growth of the tire can be suppressed, and therefore, uneven wear due to radial growth of the tire can be suppressed. Note that the above effect can be more effectively obtained than in the case where the circumferential belt layer 6b is disposed between the inclined belt layers 6c and 6d or on the tire radial outside of the inclined belt layers 6c and 6d.

Further, in the present embodiment, since the elastic modulus E1 in the high strain region of the extracted cord of the reinforcement cord is 30 GPa to 80 GPa, as described above, the cut resistance of the cord can be improved, and therefore, the durability of the tire can be enhanced. In addition, the radial growth of the tire when internal pressure is applied can be effectively suppressed.

As described above, according to the pneumatic tire of the present embodiment, both uneven wear resistance and durability can be achieved.

The tire may be provided with an RF tag 100 as a communication device. The RF tag includes an IC chip and an antenna. The RF tag may, for example, be disposed sandwiched between positions of a plurality of identical or different members constituting the tire. By doing so, it becomes easier to attach the RF tag during tire production, thereby improving the productivity of tires equipped with the RF tag. In this example, the RF tag may, for example, be disposed sandwiched between the bead filler and another member adjacent to the bead filler. The RF tag may also be embedded within any member constituting the tire. By doing so, compared to the case where the RF tag is disposed sandwiched between a plurality of members constituting the tire, the load applied to the RF tag can be reduced. As a result, the durability of the RF tag can be improved. In this example, the RF tag may, for example, be embedded within a rubber member such as tread rubber or side rubber. Preferably, the RF tag is not disposed at a position that serves as a boundary between members having different rigidity in the peripheral length direction, which is the direction along the outer surface of the tire in a cross-sectional view in the tire width direction. By doing so, the RF tag is not disposed at a position where strain is likely to concentrate due to a rigidity step. Therefore, the load applied to the RF tag can be reduced. As a result, the durability of the RF tag can be improved. In this example, the RF tag is preferably not disposed at a position that serves as a boundary between the end portion of the carcass in a cross-sectional view in the tire width direction and a member (such as side rubber) adjacent to the end portion of the carcass. The number of RF tags is not particularly limited. The tire may be provided with only one RF tag, or may be provided with two or more RF tags. Here, the RF tag is described as an example of a communication device, but a communication device different from an RF tag may also be used.

The RF tag may, for example, be disposed in the tread portion of the tire. By doing so, the RF tag is not damaged by a side cut of the tire. The RF tag may, for example, be disposed in the central portion of the tread in the tire width direction. The central portion of the tread is a position in the tread portion where flexure is less likely to concentrate. By doing so, the load applied to the RF tag can be reduced. As a result, the durability of the RF tag can be improved. Furthermore, it is possible to suppress the occurrence of differences in communication with the RF tag from both outer sides of the tire in the tire width direction. In this example, the RF tag may, for example, be disposed within a range of 1/2 of the tread width centered on the tire equatorial plane in the tire width direction. The RF tag may, for example, be disposed at the tread edge in the tire width direction. When the position of the reader communicating with the RF tag is predetermined, the RF tag may, for example, be disposed at one tread edge on the side closer to the reader. In this example, the RF tag may, for example, be disposed within a range of 1/4 of the tread width, with the tread edge as the outer end in the tire width direction.

The RF tag may, for example, be disposed on the tire inner cavity side relative to the carcass including one or more carcass plies spanning between bead portions. By doing so, the RF tag becomes less susceptible to damage from external impacts, side cuts, or nail punctures. As one example, the RF tag may be disposed in close contact with the surface of the carcass on the tire inner cavity side. As another example, when another member is present on the tire inner cavity side relative to the carcass, the RF tag may, for example, be disposed between the carcass and the other member located on the tire inner cavity side relative to the carcass. As an example of another member located on the tire inner cavity side relative to the carcass, an inner liner forming the inner surface of the tire may be mentioned. As another example, the RF tag may be attached to the inner surface of the tire facing the tire inner cavity. By configuring the RF tag to be attached to the inner surface of the tire, attachment of the RF tag to the tire and inspection or replacement of the RF tag can be easily performed. That is, the attachability and maintainability of the RF tag can be improved. Furthermore, by attaching the RF tag to the inner surface of the tire, it is possible to prevent the RF tag from becoming a nucleus of tire failure compared to a configuration in which the RF tag is embedded in the tire. In addition, when the carcass includes a plurality of carcass plies and there is a position where the plurality of carcass plies are stacked, the RF tag may be disposed between the stacked carcass plies.

The RF tag may, for example, be disposed on the tire radial outer side relative to the belt including one or more belt plies in the tread portion of the tire. As one example, the RF tag may be disposed in close contact with the belt on the tire radial outer side relative to the belt. As another example, when a reinforcement belt layer is provided, the RF tag may be disposed in close contact with the reinforcement belt layer on the tire radial outer side relative to the reinforcement belt layer. As another example, the RF tag may be embedded in the tread rubber on the tire radial outer side relative to the belt. By disposing the RF tag on the tire radial outer side relative to the belt in the tread portion of the tire, communication with the RF tag from the outside of the tire in the tire radial direction is less likely to be hindered by the belt. Therefore, communication with the RF tag from the outside of the tire in the tire radial direction can be improved. Furthermore, the RF tag may, for example, be disposed on the tire radial inner side relative to the belt in the tread portion of the tire. By doing so, the RF tag is covered by the belt on the tire radial outer side, making it less susceptible to damage from impacts or nail punctures from the tread surface. As one example, the RF tag may be disposed between the belt and the carcass located on the tire radial inner side relative to the belt in the tread portion of the tire. Furthermore, when the belt includes a plurality of belt plies, the RF tag may be disposed between any two belt plies in the tread portion of the tire. By doing so, the RF tag is covered by one or more belt plies on the tire radial outer side, making it less susceptible to damage from impacts or nail punctures from the tread surface.

The RF tag may, for example, be disposed sandwiched between the cushion rubber and the tread rubber, or between the cushion rubber and the side rubber. By doing so, impacts on the RF tag can be mitigated by the cushion rubber. Therefore, the durability of the RF tag can be improved. Furthermore, the RF tag may, for example, be embedded within the cushion rubber. In addition, the cushion rubber may be composed of a plurality of adjacent rubber members of the same or different types. In such a case, the RF tag may be disposed sandwiched between the plurality of rubber members constituting the cushion rubber.

The RF tag may, for example, be disposed at a position of the sidewall portion or bead portion of the tire. The RF tag may, for example, be disposed at one sidewall portion or one bead portion on the side closer to a reader capable of communicating with the RF tag. By doing so, communication between the RF tag and the reader can be enhanced. As one example, the RF tag may be disposed between the carcass and the side rubber, or between the tread rubber and the side rubber. The RF tag may, for example, be disposed between the position of the tire maximum width and the position of the tread surface in the tire radial direction. By doing so, compared to a configuration in which the RF tag is disposed on the tire radial inner side relative to the position of the tire maximum width, communication with the RF tag from the outside of the tire in the tire radial direction can be enhanced. The RF tag may, for example, be disposed on the tire radial inner side relative to the position of the tire maximum width. By doing so, the RF tag is disposed near the bead portion, which has high rigidity. Therefore, the load applied to the RF tag can be reduced. As a result, the durability of the RF tag can be improved. As one example, the RF tag may be disposed at a position adjacent to the bead core in the tire radial direction or tire width direction. The vicinity of the bead core is less likely to concentrate strain. Therefore, the load applied to the RF tag can be reduced. As a result, the durability of the RF tag can be improved. In particular, it is preferable that the RF tag is disposed on the tire radial inner side relative to the position of the tire maximum width and on the tire radial outer side relative to the bead core of the bead portion. By doing so, the durability of the RF tag can be improved, and communication between the RF tag and the reader is less likely to be hindered by the bead core, thereby enhancing the communication performance of the RF tag. Furthermore, when the side rubber is composed of a plurality of adjacent rubber members of the same or different types in the tire radial direction, the RF tag may be disposed sandwiched between the plurality of rubber members constituting the side rubber.

In the case of a passenger vehicle tire, the RF tag may be disposed sandwiched between the bead filler and a member adjacent to the bead filler. By doing so, the RF tag can be disposed at a position where strain is less likely to concentrate due to the arrangement of the bead filler. Therefore, the load applied to the RF tag can be reduced. As a result, the durability of the RF tag can be improved. The RF tag may, for example, be disposed sandwiched between the bead filler and the carcass. The portion of the carcass that sandwiches the RF tag together with the bead filler may be located on the outer side in the tire width direction relative to the bead filler, or may be located on the inner side in the tire width direction. When the portion of the carcass that sandwiches the RF tag together with the bead filler is located on the outer side in the tire width direction relative to the bead filler, the load applied to the RF tag due to impacts or damage from the outer side of the tire in the tire width direction can be further reduced. As a result, the durability of the RF tag can be further improved. Furthermore, the bead filler may include a portion disposed adjacent to the side rubber. In such a case, the RF tag may be disposed sandwiched between the bead filler and the side rubber. Furthermore, the bead filler may include a portion disposed adjacent to the rubber chafer. In such a case, the RF tag may be disposed sandwiched between the bead filler and the rubber chafer.

In the case of a truck or bus tire, the RF tag may be disposed sandwiched between the stiffener and a member adjacent to the stiffener. By doing so, the RF tag can be disposed at a position where strain is less likely to concentrate due to the arrangement of the stiffener. Therefore, the load applied to the RF tag can be reduced. As a result, the durability of the RF tag can be improved. The RF tag may, for example, be disposed sandwiched between the stiffener and the side rubber. The RF tag may also be disposed sandwiched between the stiffener and the carcass. The portion of the carcass that sandwiches the RF tag together with the stiffener may be located on the outer side in the tire width direction relative to the stiffener, or may be located on the inner side in the tire width direction. When the portion of the carcass that sandwiches the RF tag together with the stiffener is located on the outer side in the tire width direction relative to the stiffener, the load applied to the RF tag due to impacts or damage from the outer side of the tire in the tire width direction can be further reduced. As a result, the durability of the RF tag can be further improved. The stiffener may include a portion disposed adjacent to the rubber chafer. In such a case, the RF tag may be disposed sandwiched between the stiffener and the rubber chafer. The stiffener may include a portion disposed adjacent to the hat rubber on the outer side in the tire width direction. In such a case, the RF tag may be disposed sandwiched between the stiffener and the hat rubber. The stiffener may be composed of a plurality of rubber members having different hardness. In such a case, the RF tag may be disposed sandwiched between the plurality of rubber members constituting the stiffener. The RF tag may be disposed sandwiched between the hat rubber and a member adjacent to the hat rubber. The RF tag may, for example, be disposed sandwiched between the hat rubber and the carcass ply. By doing so, impacts on the RF tag can be mitigated by the hat rubber. Therefore, the durability of the RF tag can be improved.

The RF tag may, for example, be disposed sandwiched between the rubber chafer and the side rubber. By doing so, the RF tag can be disposed at a position where strain is less likely to concentrate due to the arrangement of the rubber chafer. Therefore, the load applied to the RF tag can be reduced. As a result, the durability of the RF tag can be improved. The RF tag may, for example, be disposed sandwiched between the rubber chafer and the carcass. By doing so, the load applied to the RF tag due to impacts or damage from the rim can be reduced. Therefore, the durability of the RF tag can be improved.

In the case of a truck or bus tire, the RF tag may be disposed sandwiched between the nylon chafer and another member adjacent to the nylon chafer on the outer or inner side in the tire width direction. By doing so, the position of the RF tag is less likely to fluctuate during tire deformation. Therefore, the load applied to the RF tag during tire deformation can be reduced. As a result, the durability of the RF tag can be improved. The nylon chafer may, for example, include a portion disposed adjacent to the rubber chafer on the outer side in the tire width direction. In such a case, the RF tag may be disposed sandwiched between the nylon chafer and the rubber chafer. The nylon chafer may, for example, include a portion disposed adjacent to the side rubber on the outer side in the tire width direction. In such a case, the RF tag may be disposed sandwiched between the nylon chafer and the side rubber. The nylon chafer may, for example, include a portion disposed adjacent to the stiffener on the inner side in the tire width direction. In such a case, the RF tag may be disposed sandwiched between the nylon chafer and the stiffener. Furthermore, the nylon chafer may, for example, include a portion disposed adjacent to the hat rubber on the inner side in the tire width direction. In such a case, the RF tag may be disposed sandwiched between the nylon chafer and the hat rubber. Furthermore, the nylon chafer may, for example, include a portion disposed adjacent to the carcass on the inner side in the tire width direction. In such a case, the RF tag may be disposed sandwiched between the nylon chafer and the carcass. Furthermore, the nylon chafer may, for example, include a portion disposed adjacent to the wire chafer on the inner side in the tire width direction. In such a case, the RF tag may be disposed sandwiched between the nylon chafer and the wire chafer. As described above, the RF tag may be disposed sandwiched between the nylon chafer and another member adjacent to the nylon chafer on the outer or inner side in the tire width direction. In particular, by having the outer side in the tire width direction of the RF tag covered by the nylon chafer, the load applied to the RF tag due to impacts or damage from the outer side of the tire in the tire width direction can be further reduced. Therefore, the durability of the RF tag can be further improved.

The RF tag may be disposed sandwiched between the wire chafer and another member adjacent to the wire chafer on the inner or outer side in the tire width direction. By doing so, the position of the RF tag is less likely to fluctuate during tire deformation. Therefore, the load applied to the RF tag during tire deformation can be reduced. As a result, the durability of the RF tag can be improved. The member adjacent to the wire chafer on the inner or outer side in the tire width direction may, for example, be a rubber member such as a rubber chafer. The member adjacent to the wire chafer on the inner or outer side in the tire width direction may, for example, be the carcass.

### EXAMPLES

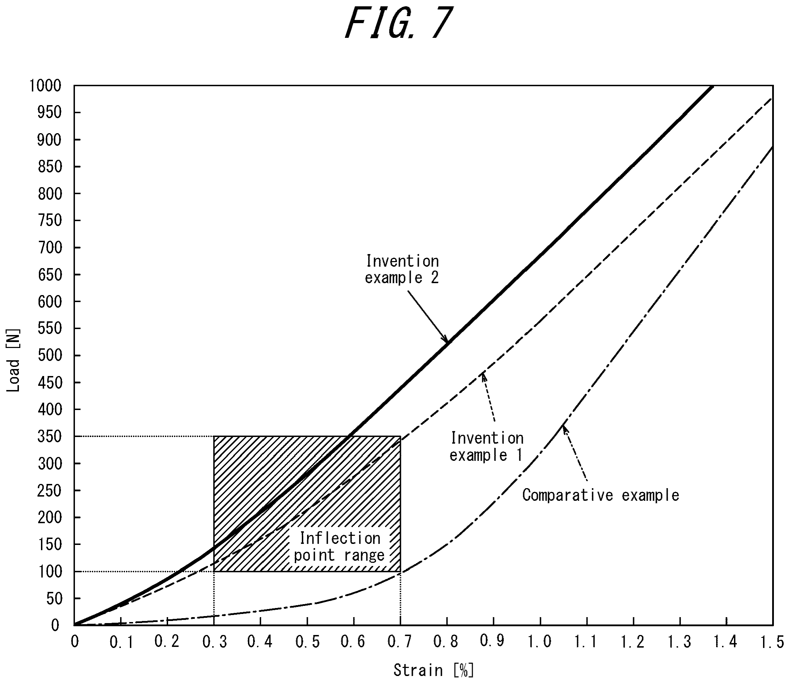

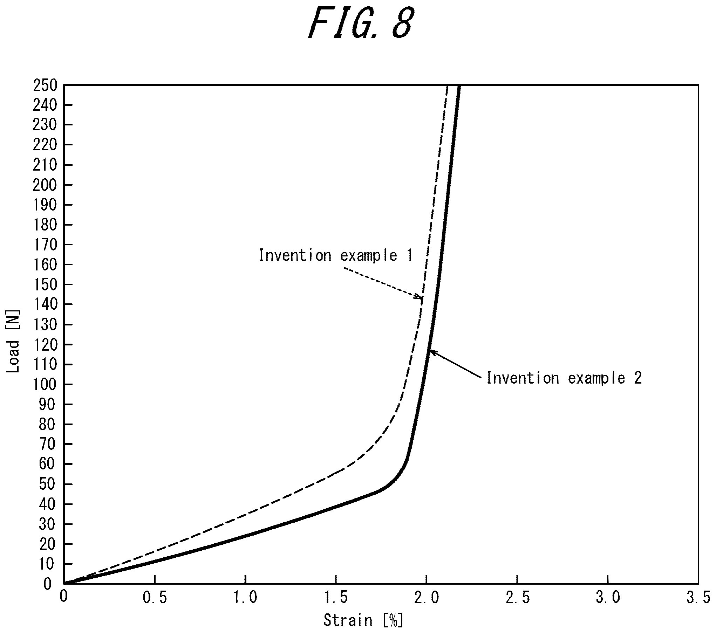

Hereinafter, examples of the present disclosure will be described, but the present disclosure is not limited to the following examples. In order to confirm the effects of the present disclosure, for pneumatic tires according to Examples 1 and 2 and Comparative Example, the tire structure and conditions described below were set to evaluate the separation at the end of the circumferential belt layer, and evaluation was performed using an FEM model. The specifications of each tire are presented in Table 1 below together with the evaluation results. In addition, FIGS. 7 and 8 respectively illustrate the S-S curves of extracted cords and green cords. As illustrated in FIG. 4, each tire includes two or more inclined belt layers, each formed of a rubberized layer of belt cords extending so as to intersect each other between layers, and one or more circumferential belt layers, each disposed on a tire radial inner side of the inclined belt layers and formed of a rubberized layer of reinforcement cords extending in the tire circumferential direction or extending at an inclination angle of 5° or less with respect to the tire circumferential direction. As the conditions for FEM evaluation, rolling was performed at an internal pressure of 690 kPa, a load of 37.85 kN, and a speed of 60 km/h. For each tire model, the larger absolute value of the maximum and minimum shear strain in the circumferential layer end rubber was indexed and used as the result for circumferential layer end separation. The smaller the value, the smaller the shear strain, and the less likely circumferential layer end separation is to occur.

**[Table 1]**

| | | Comparative Example | Invention Example 1 | Invention Example 2 |
|---|---|---|---|---|
| Green cord | Cord structure | 3+9+15×0.23 | 4×(0.28+6×0.25) | 5×(0.255+6×0.225) |
| | Drawing | FIG. 5 | FIG. 6 | FIG. 3 |
| | Cord diameter (mm) | 1.40 | 1.96 | 1.98 |
| | Maximum value of filament diameter / cord diameter | 0.164 | 0.143 | 0.129 |
| | Inflection point (strain: %) | - | 1.89 | 1.97 |
| | Inflection point (load: N) | - | 64 | 46 |
| | Low strain region (elastic modulus: GPa) | - | 2.4 | 1.6 |
| | High strain region (elastic modulus: GPa) | - | 57 | 65 |
| Extracted cord | Inflection point (strain: %) | 0.74 | 0.56 | 0.49 |
| | Inflection point (load: N) | 49 | 216 | 248 |
| | Low strain region (elastic modulus: GPa) | 7 | 28 | 39 |
| | High strain region (elastic modulus: GPa) | 92 | 55 | 59 |
| Tire evaluation | Circumferential layer end separation (index) | 100 | 71 | 74 |

As indicated in Table 1, it can be seen that Examples 1 and 2 of the present disclosure exhibit superior tire durability compared to the Comparative Examples.

[Contribution to the Sustainable Development Goals (SDGs) led by the United Nations]

The SDGs have been proposed toward the realization of a sustainable society. One embodiment of the present disclosure is considered to be a technology that can contribute to, for example, "No. 12: Responsible Consumption and Production" and "No. 13: Climate Action."

### REFERENCE SIGNS LIST

1: pneumatic tire (tire),
2: bead portion,
3: sidewall portion,
4: tread portion,
5: carcass,
6: reinforcement layer,
7: wire chafer,
10: steel cord for tire,
11: sheath strand,
12: core filament,
13: sheath filament,
100: communication device,
CL: tire equatorial plane

## Claims

1. A pneumatic tire comprising: two or more inclined belt layers each formed of a rubberized layer of belt cords extending so as to intersect each other between layers; and
one or more circumferential belt layers, each disposed on a tire radial inner side of the inclined belt layers and formed of a rubberized layer of reinforcement cords extending in the tire circumferential direction or extending at an inclination angle of 5° or less with respect to the tire circumferential direction,
wherein an elastic modulus E1 in a high strain region of an extracted cord of the reinforcement cords is 30 GPa to 80 GPa.

2. The pneumatic tire according to claim 1, wherein the reinforcement cords are each formed by twisting together strands, each of which is formed by twisting together a plurality of filaments, and the number of strands is 3 to 5.

3. The pneumatic tire according to claim 2, wherein a structure of each of the strands is a 1+N structure, N is an integer from 4 to 7, and a filament diameter of the filaments is 0.3 mm or less.

4. The pneumatic tire according to any one of claims 1 to 3, wherein a cord diameter of the reinforcement cords is 1.5 mm or more.
